# EUROPEAN PATENT APPLICATION

(11) **EP 0 881 171 A1**
(43) Date of publication of application: **02.12.1998**
(21) Application number: 98830362.4
(22) Date of filing: 12.06.1998
(51) Int. Cl.: B65G 19/02, B61B 12/12

(54) **Suspended material conveyor system with running cable and double-clamp carriers**

(30) Priority: 14.01.1998 IT NY980005
(71) Applicant: Impero Automazioni S.P.A., 80142 Napoli (IT)
(72) Inventor: Impero, Pasquale, 80142 Napoli (IT)
(74) Representative: Cirillo, Gennaro

(57) **Abstract**

A suspended material conveyor system with running cable (12) comprising carriers (10) moving along a rail (11) and connected to a running cable (12) by two clamps (14) which can be opened or closed according to the path to be followed by means of a weight (16) which can run up and down so as to come into contact with fixed cams suitably located along the path.

## Description

Current conveyor systems used in factoris for conveying parts or assemblies with different forms and weights from one work station to another according to various production cycles are essentially of two types:
- conveyor systems with chain drive;
- conveyor systems with motorized carriers.
In the first type, the chain has a pulling function and it is supported by a construction which supports the loads too. In the second type, the carriers travel along a suspended monorail and each of them is motorized.
Both systems have a great handling flexibility and for this reason they are widely used in process industry.
Cable-pulled systems have also been used. Each carrier of such systems can be hooked onto the cable in different ways but only by one clamp member. The single clamp sets limits to the carrier handling so that under certain operating conditions it is necessary to disconnect the carriers from the cable and to convey them by means of conveyors of other types.

The present industrial invention seeks to provide a new conveyor characterized by two clamp members which are separately driven. Such a solution allows the same operating flexibility as the two systems used today, i.e. chain conveyors and motorized conveyors, to be attained along with further advantages which will be mentioned hereafter.
An exemplificative, not limiting embodiment of the conveyor according to the solution proposed by the present invention is shown in the accompanying drawings.

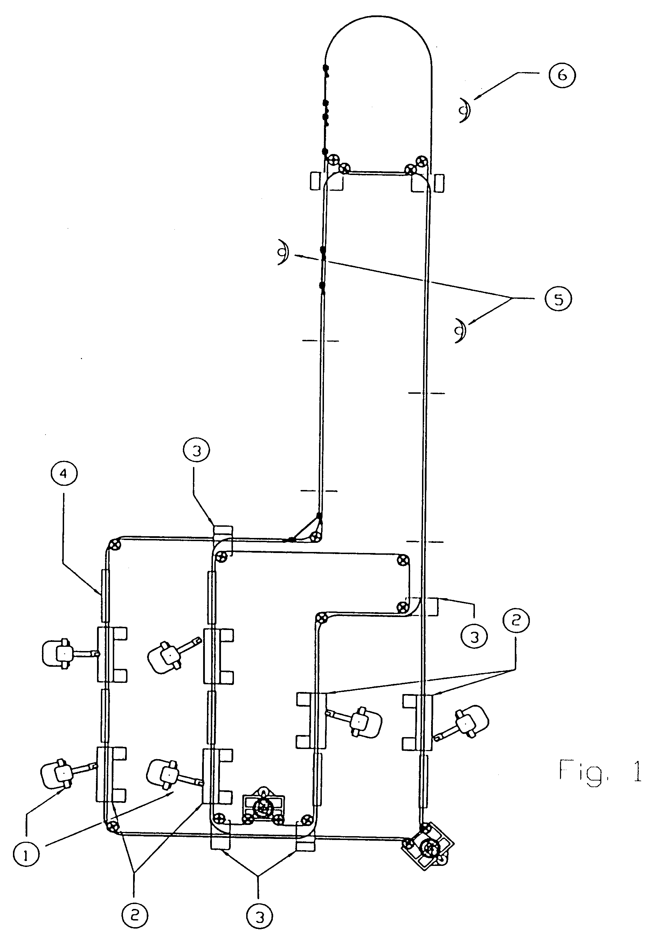

Table I with Fig. 1 shows an example of a possible path of a robotized welding line provided with the conveyor of the invention and comprising:
- robotized welding stations (1) and descenders (2);
- switches (3);
- idle stations (4);
- loading/unloading stations (5),
- maintenance area and carrier store (6).

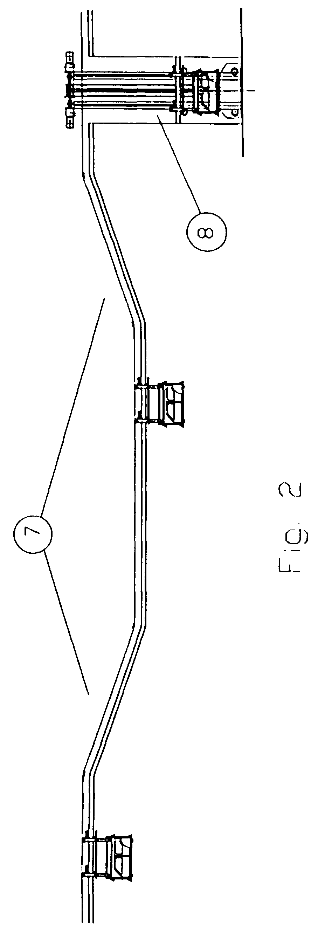

Table II with Fig. 2 shows the possibility for the conveyor to run up and down and to operate with the descender dwelling at working stations (8).

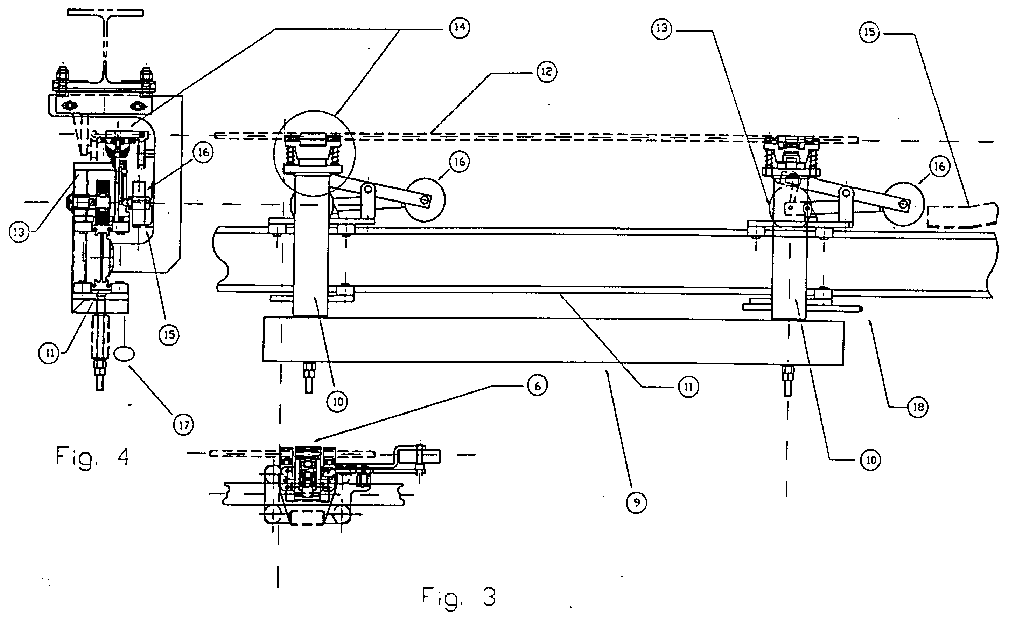

Table III with Fig. 3 and Fig. 4 show a longitudinal view and a cross-sectional view of the conveyor on a rail, respectively; the conveyor provides:
- a connection beam (9);
- two carriers (10) supported by rail (11) and connected to running cable (12).
Each carrier is provided with:
- a rigid frame provided with carrying wheel (13);
- a clamp member (14) consisting of a clamp which opens under control of cams (15) and closes under control of a weight (16);
- manual control (17) for clamping or releasing the cable in order to convey, remove, or enter the carriers in case of accident;
- safety device (18) for opening the clamp in case of collision against an obstacle;

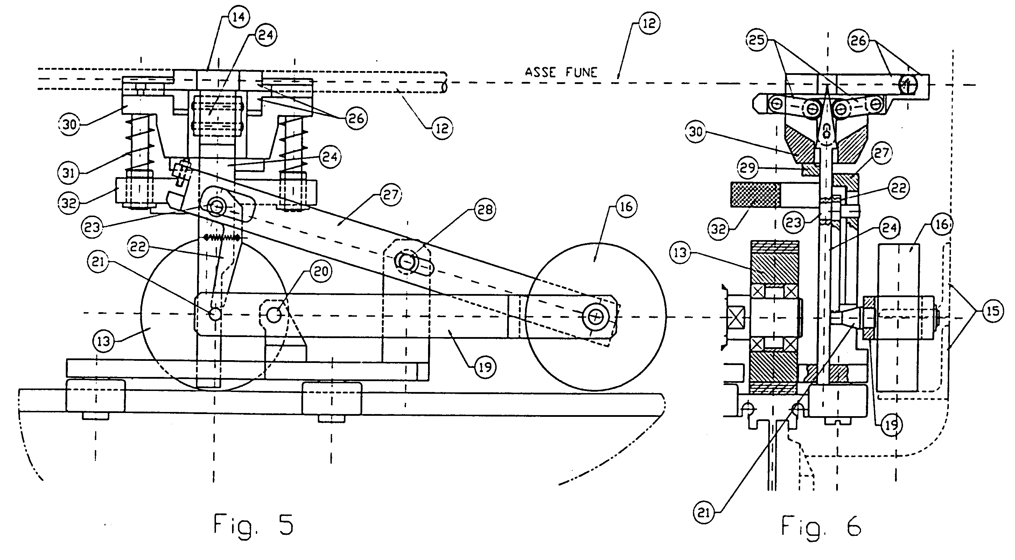

Table IV with Figs. 5 and 6 show a longitudinal view and a cross-sectional view of the clamp member, respectively.

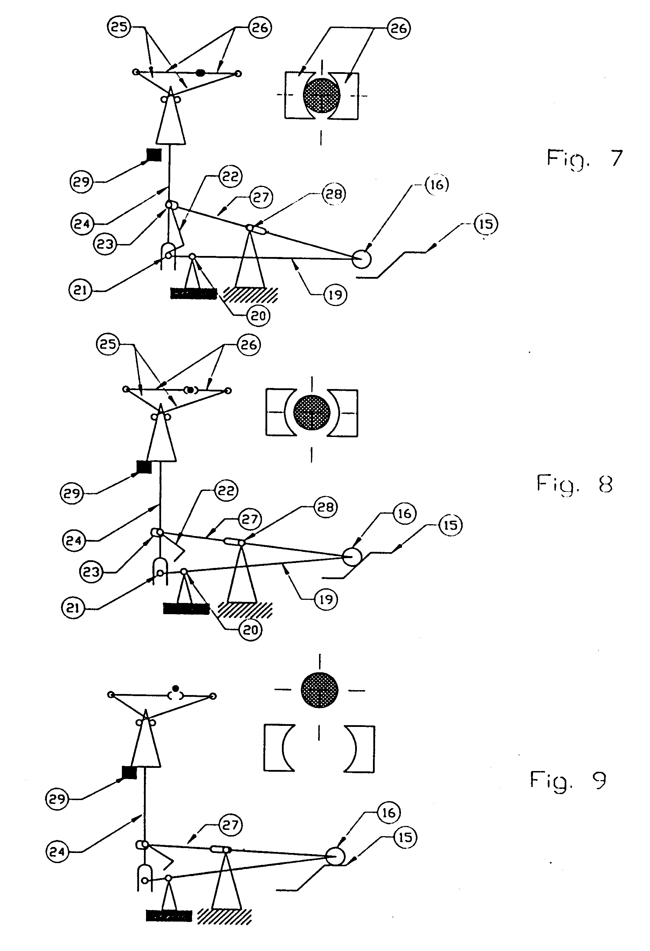

Table V with Figs. 7, 8 and 9 schematically show the operation of the mechanism of Figs. 5 and 6. During its operating cycle the clamp member which moves continuously takes three significant positions:
- clamping of the cable;
- release of the cable;
- lowering of the clamp
as shown schematically in Table V and as described below.

Clamping of the cable (Fig. 7):
Weight (16) suspended by lever (19) pivoting at (20) pushes through pin (21) lever (22) pivoting at pin (23) secured to wedge rod (24). Because of such a thrust said rod wedges in between side rods (25) and causes jaws (26) forming the clamp to be clamped.

Release of the cable (Fig. 8):

When weight (16) engages the upward sloped ramp of cam (15) during its movement, it stops clamping the cable and starts to rise until the mechanism is brought to the position of Fig. 8 through the following movements:
- lowering of support pin (21) and release of the jaw pressure;
- lowering of lever (27) pivoting at (28), thus causing lever (22) to rotate and wedge rod (24) to be disengaged. On its further rotation, lever (27) lowers rod (24) through pin (23) until said rod abuts against member (29);
- driving of side rods (25) which open clamping jaws (26) by rod (24) during its lowering stroke.

Lowering of the clamp (Fig. 9)
Weight (16) causes the following movements in its rising stroke to the high portion of cam (15):
- further lowering of rod (24) by lever (27) so as to drive abutting member (29) after its coming into contact with said rod;
- lowering of clamp support (30) connected to abutting member (29) and compression of springs (31).
The same movements follow one another in reverse succession when weight (16) follows a downward ramp until the jaws clamp the cable again.
Such a mechanism allows the conveyor to be stopped by little movements of the levers which control the closure of the jaws. This is very important when the stop control is given by safety devices in case of collision.

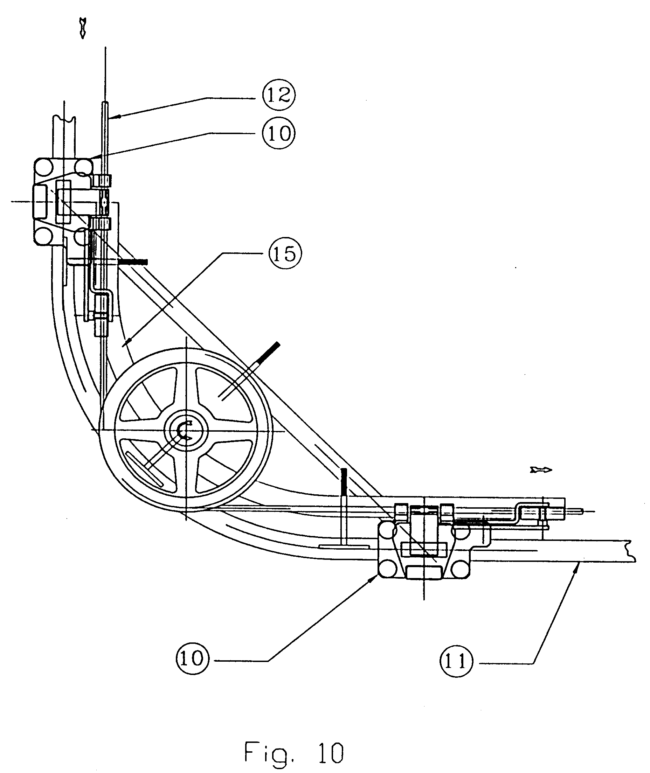

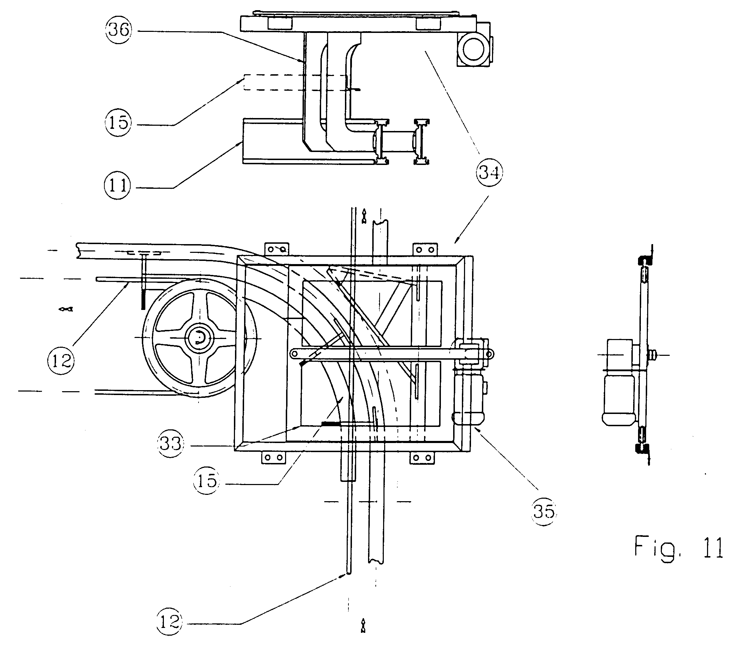

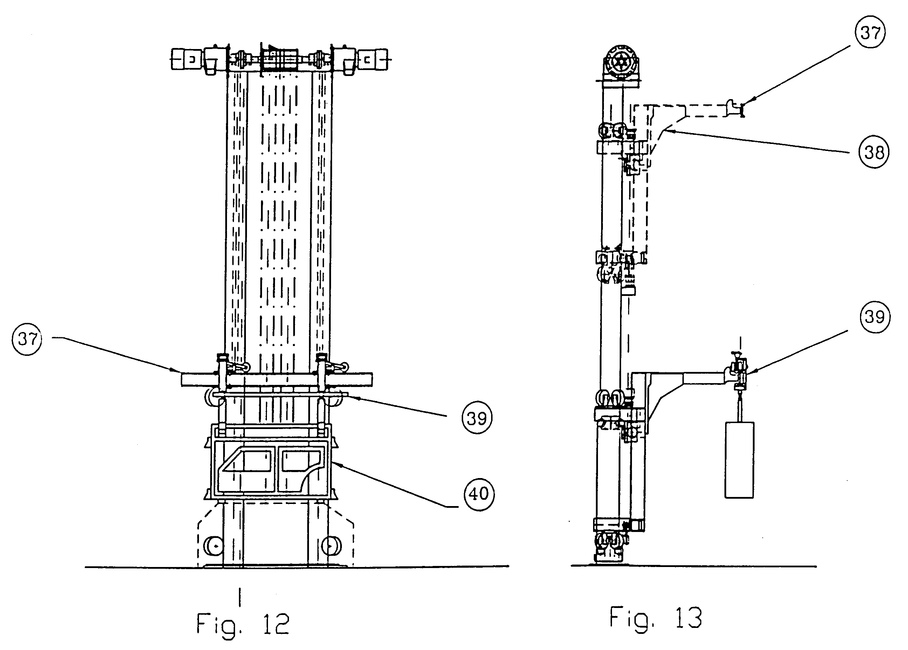

Table IV also shows fixed plate (32) connected to the support of the wheel. Complete release of the clamp from the cable avoids any interference with the cable as well as it allows the carrier to freely move along any path and also to change the same; each carrier is provided with auxiliary safety devices.
The system allows the carriers to follow curved paths under high safety conditions. Fig. 10 of Table VI shows by way of example a curved path.
A cam (15) which opens and closes the jaws of each clamp according to the mode of operation described and illustrated in Tables IV and V is located along the curved path at the beginning of the straight path. Opening and closure of the clamps are carried out in succession, i.e. when the fore clamp is disconnected, the carrier is driven by the rear clamp and when the latter is about to leave the cable, the fore clamp is locked and drives the carrier.
Table VII with Fig. 11 shows an example of path change made by means of a box switch. The box of the switch is shown by (33), the support frame by (34), the electric drive system by (35), and the rail support bracket by (11).
In such a case drive cam (15) is located only in the curved path and operates as previously shown in Tables IV and V.
The proposed drive system has two clamping points in the running cable and the clamps can be controlled independently from each other so as to:
- change path without additional transfer means;
- travel along curved paths, avoiding idle pulleys with large diameters and the engagement of the clamps with the races of the pulleys;
- have the maximum drive force because each clamp is capable of transmitting alone the force for moving the carrier.
Table VIII with Figs. 12 and 13 shows at last an example of a descender in a work station in which a moving rail member is shown by (37), the descender slide by (38), the carrier by (39) and the chuck by (40). Such a solution which is common to other systems is an example of the flexibility provided by the present system.

The advantages of the present system over a chain conveyor are:
- noiselessness;
- cleanliness;
- lower ordinary maintenance costs;
- lower component wear.
The advantages of the present system over a motorized system are:
- lower installation cost;
- low handling cost;
- lower both ordinary and extraordinary maintenance costs;
- limited use both of electronic and electric control components;
- no electric, not shielded conductors and no sliding contacts.
The present system is the only system that has two clamping points for each carrier in the running cable used as drive means in a suspended monorail conveyor. This gives it a high degree of flexibility along with the construction and installation simplicity which makes it capable of being used also in process industries with complex production cycles.
Shape and construction modifications to the present solution may be made without departing from the scope of the present invention which is summarized in the appended claims.

## Claims

1. A suspended material conveyor system with running cable, characterized in that it provides a conveyor formed of two carriers following each other which move on a rail and are connected by a beam, each carrier being provided with a clamp capable of clamping a running cable, said clamp being opened by the abutment of the weight causing the clamping and located at each carrier against cams located along the path so as to allow the carrier to change direction of movement, travel along switches, curves and any type of path.

2. The conveyor system of the preceding claim, characterized in that the closure of the clamps is caused by a mechanism comprising a rod which wedges in two side rods which keep the clamps tightened by the combined movements of several levers under the action of a weight.

3. The conveyor system of the preceding claims, characterized in that when the weight of preceding claim 2 abuts against suitable ramp cams located along the rail, it does not exert its closure action on the clamps any longer with the result of shifting said levers, moving said rod away from the side rods and opening the clamps engaged with the running cable.

4. The conveyor system of the preceding claims, characterized in that when the weight of the preceding claims moves upwards along the ramp cam, it causes the clamps to be further lowered until they are moved away from the cable to a plane parallel thereto.

5. The conveyor system of the preceding claims, characterized in that the differentiated opening of the two clamps to which the carrier is connected allows said carrier to change direction of movement and to move along curves, switches and any other path due to the fact that one clamp tightens the cable causing the carrier to be driven while the other clamp leaves the running cable, i.e. the connection to the running cable is ensured by at least one clamp.

6. The conveyor system of the preceding claims, characterized in that it also provides a manual system of opening and closing the clamps causing the carriers to be conveyed, removed or entered along the path in case of accidents.

7. The conveyor system of the preceding claims, characterized in that it provides a safety device for controlling the opening of the clamps in case of collision against an obstacle.

8. The conveyor system of the preceding claims, characterized in that there are provided complex material handling circuits comprising switches, dwell stations, loading and unloading stations, maintenance and store stations.
